(19) Europäisches Patentamt
European Patent Office
Office européen des brevets

(11) **EP 3 679 102 B1**

(12) **EUROPÄISCHE PATENTSCHRIFT**

(45) Veröffentlichungstag und Bekanntmachung des Hinweises auf die Patenterteilung:
**27.04.2022 Patentblatt 2022/17**

(21) Anmeldenummer: **18759289.4**

(22) Anmeldetag: **22.08.2018**

(51) Internationale Patentklassifikation (IPC):
**C09J 7/30** *(2018.01)* **B26D 7/26** *(2006.01)*
**B65H 18/10** *(2006.01)* **B65H 23/032** *(2006.01)*

(52) Gemeinsame Patentklassifikation (CPC):
**C09J 7/30; B26D 7/2635; B65H 18/103;**
**B65H 23/0326;** B26D 1/185; B65H 2301/4148;
B65H 2301/5113; B65H 2301/515323;
B65H 2553/414; C09J 2203/302; C09J 2301/204

(86) Internationale Anmeldenummer:
**PCT/EP2018/072646**

(87) Internationale Veröffentlichungsnummer:
**WO 2019/048232 (14.03.2019 Gazette 2019/11)**

(54) **VERFAHREN UND EINRICHTUNG ZUR HERSTELLUNG EINES KLEBEBANDES**

METHOD AND DEVICE FOR PRODUCING AN ADHESIVE TAPE

PROCÉDÉ ET DISPOSITIF POUR LA FABRICATION D'UN RUBAN ADHÉSIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2017 DE 102017120419**

(43) Veröffentlichungstag der Anmeldung:
**15.07.2020 Patentblatt 2020/29**

(73) Patentinhaber: **Certoplast Technische Klebebänder GmbH**
**42285 Wuppertal (DE)**

(72) Erfinder:
• **RAMBUSCH, René**
**42113 Wuppertal (DE)**
• **RAMBUSCH, Peter**
**42215 Wuppertal (DE)**
• **RUHNAU, Kay**
**42855 Remscheid (DE)**

(74) Vertreter: **Andrejewski - Honke**
**Patent- und Rechtsanwälte Partnerschaft mbB**
**An der Reichsbank 8**
**45127 Essen (DE)**

(56) Entgegenhaltungen:
**WO-A1-2012/167806 GB-A- 2 523 390**

EP 3 679 102 B1

## Beschreibung

Die Erfindung betrifft ein Verfahren zur Herstellung eines Klebebandes mit folgenden Verfahrensschritten:

- es wird eine Materialbahn aus einem Trägerbandmaterial von einer Abwickeleinheit zugeführt;
- die zugeführte Materialbahn wird anschließend an zumindest einer Oberfläche in einer Beschichtungseinheit mit wenigstens einem Klebstoffstreifen ausgerüstet;
- die mit dem Klebstoffstreifen ausgerüstete Materialbahn wird nachfolgend mit der Hilfe einer Schneideinrichtung in zumindest zwei Längsstreifen geschnitten und zu einzelnen Klebebändern konfektioniert.

Ein Verfahren und eine zugehörige Vorrichtung der eingangs beschriebenen Ausprägung wird beispielsweise in der EP 2 744 865 B1 der Anmelderin detailliert vorgestellt. Hier wird der Kleber bzw. Klebstoff insgesamt kontaktlos auf die Trägerbahn aufgebracht und die Trägerbahn wird anschließend in Längsrichtung in die einzelnen Klebebänder geschnitten. Im Bereich der Beschichtungseinheit zum Aufbringen des Klebstoffstreifens wird die Trägerbahn im Wesentlichen vertikal oder nahezu vertikal geführt. Dadurch lässt sich der Klebstoffstreifen auf den bandförmigen Träger aufbringen und wird insbesondere ein sogenanntes "Verlaufen" minimiert bzw. gänzlich vermieden.

Im Stand der Technik nach der GB 2 523 390 A geht es um ein vergleichbares Verfahren, bei dem jedoch zusätzlich in Abhängigkeit von Signalen eines Sensors die Schneidvorrichtung vor dem Schneidvorgang quer bewegt wird, um die gewünschten Längsschnitte positionsgenau setzen zu können. Bei der Schneideinrichtung handelt es sich um Messer oder Klingen.

Bei einer anderen Vorgehensweise entsprechend der WO 2012/167806 A1 wird ein Drucker zum Bedrucken eines einseitig mit Klebstoff beschichteten Bandes vorgestellt. Der Drucker verfügt zu diesem Zweck über eine Steuerungseinrichtung, eine Transportvorrichtung für das Band und mindestens einen Sensor, mit dessen Hilfe klebefreie und/oder klebende Bereiche des Bandes erkannt werden können. Zum Durchtrennen des Bandes positioniert die Steuereinrichtung die Transportvorrichtung derart, dass die Schneideinrichtung das Band stets in einem kleberfreien Bereich durchtrennt.

Die auf diese Weise hergestellten Klebebänder sind unterschiedlich ausgelegt bzw. können unterschiedlich ausgebildet sein. So unterscheidet man in der Praxis Klebebänder für eine Linkswicklung von solchen für eine Rechtswicklung. Hierbei wird das fragliche Klebeband jeweils wendeiförmig um zusammenzufassende und zu ummantelnde elektrische Kabel herumgewickelt, um insgesamt einen Kabelsatz respektive Kabelbaum für automobile Anwendungen herstellen zu können. Das hat sich grundsätzlich bewährt.

Vergleichbares wird in der EP 2 627 539 B1 der Anmelderin beschrieben. An dieser Stelle erfolgt eine spezielle Bearbeitung des Trägers bzw. dessen Oberfläche. Dadurch gelingt eine besonders flexible Umwicklung der zusammenzufassenden Kabel und ist der Gewebeträger besonders medienbeständig, und zwar ohne eine zusätzliche Beschichtung aufbringen zu müssen. Auch in diesem Fall werden im Allgemeinen Klebebänder hergestellt, die aus einem Bandmaterial in Längsrichtung herausgeschnitten und anschließend in Wendelrichtung um Kabel zur Herstellung eines Kabelbaums herumgewickelt werden.

Dabei kann erneut zwischen Klebebändern für die Linkswicklung und solchen für die Rechtswicklung unterschieden werden.

Die schließlich noch zu nennende WO 02/18509 A1 befasst sich mit einem Verfahren zum Ummanteln von langgestrecktem Gut wie insbesondere Kabelsätzen mit einem Klebeband. Dabei wird das Klebeband in einer spiralförmigen bzw. wendeiförmigen Bewegung um das langgestreckte Gut herumgeführt. Auf zumindest einer Seite des Trägermaterials des Klebebandes ist die Klebemasse in Längsrichtung in Form eines Streifens aufgebracht, der eine geringere Breite aufweist als das Trägermaterial des Klebebandes.

Der Stand der Technik hat sich grundsätzlich bewährt, wenn es darum geht, eine Materialbahn aus einem Trägerbandmaterial mit einem oder mehreren Klebstoffstreifen auszurüsten und dann in Längsrichtung zu den einzelnen Klebebändern zu konfektionieren. Allerdings werden beim gattungsbildenden Stand der Technik entsprechend der EP 2 744 865 B1 an dieser Stelle typischerweise unterschiedliche Klebebänder produziert nämlich meistens solche für eine Linkswicklung und solche für eine Rechtswicklung. Das ist im Hinblick auf eine einfache Handhabung, Logistik und Verarbeitung verbesserungsbedürftig.

Darüber hinaus wird bei dem weiteren Stand der Technik entsprechend der EP 2 627 539 B1 unter anderem mit einem Überlappungsbereich gearbeitet. Das setzt die exakte Positionierung des jeweiligen Klebstoffstreifens auf dem hergestellten Klebeband heraus. Da der Längsschnitt der mit den jeweiligen Klebstoffstreifen ausgerüsteten und zugeführten Materialbahnen im Allgemeinen mithilfe von rotierenden Messern beispielsweise eines Messerbalkens erfolgt, wie dies beispielhaft in der EP 2 744 865 B1 beschrieben wird, können Abweichungen der jeweiligen Position des Klebstoffstreifens zum Rand des Klebebandes an dieser Stelle in der Praxis nicht verhindert werden. Denn solche Abweichungen stellen sich beispielsweise dann ein, wenn das Trägerbandmaterial unterschiedlich gelängt ist und/oder bei seinem Durchlauf Querbewegungen vollführt. Hier will die Erfindung insgesamt Abhilfe schaffen.

Der Erfindung liegt das technische Problem zugrunde, ein derartiges Verfahren und eine zugehörige Einrichtung so weiterzuentwickeln, dass die Logistik und Verarbeitung vereinfacht sind und der jeweils erzeugte Klebstoffstreifen des Klebebandes eine definierte Position gegenüber dem Träger reproduzierbar aufweist.

Zur Lösung dieser technischen Problemstellung ist ein gattungsgemäßes Verfahren zur Herstellung eines Klebebandes der eingangs beschriebenen Ausprägung im Rahmen der Erfindung dadurch gekennzeichnet, dass die Materialbahn vor oder beim Schneidvorgang und nach der Ausrüstung mit dem Klebstoffstreifen mithilfe eines die Materialbahn abtastenden Sensors in Querrichtung so ausgerichtet wird, dass ein jeweils mithilfe der Schneideinrichtung erzeugter Längsschnitt positionsgenau in die Materialbahn eingebracht wird und dazu ein an eine Steuereinheit angeschlossener Antrieb für die Abwickeleinheit im Vergleich zur Vorschubrichtung bzw. Längsrichtung in der Querrichtung bewegt wird.

Dabei ist die Auslegung im Detail so getroffen, dass der Sensor die Materialbahn auf Kontrastunterschiede hin abtastet. Bei den zu ermittelnden Kontrastunterschieden handelt es sich vorteilhaft um unterschiedliche Lichtreflexionen von einerseits der (unbeschichteten) klebstofffreien Oberfläche der Materialbahn und andererseits dem Klebstoffstreifen meistens im sichtbaren Spektralbereich.

Das heißt, der Sensor nimmt einerseits die klebstofffreie Materialbahn und andererseits den Klebstoffstreifen bzw. die zugehörigen Lichtreflexionen auf. Aus unterschiedlichen Lichtreflexionen der klebstofffreien Oberfläche und des Klebstoffstreifens kann auf einen Kontrastunterschied rückgeschlossen werden und lässt sich im Ergebnis die genaue Position des Klebstoffstreifens und insbesondere sein Kantenverlauf im Vergleich zur in Längsrichtung durchlaufenden Materialbahn respektive beispielsweise zur Kante der Materialbahn exakt festhalten und vermessen. Dabei spielt es letztendlich keine Rolle, ob die klebstofffreie Oberfläche der Materialbahn selbst eine Beschichtung aufweist oder nicht. Entscheidend ist einzig und allein ein ausreichender Kontrast zwischen der klebstofffreien Oberfläche der Materialbahn und dem Klebstoffstreifen als solchen, und zwar im Hinblick auf Lichtreflexionen. Hierbei geht die Erfindung von der Erkenntnis aus, dass beispielsweise auf die Materialbahn geworfenes sichtbares Licht unterschiedlich reflektiert wird, und zwar einerseits an der klebstofffreien Oberfläche der Materialbahn und andererseits am Klebstoffstreifen bzw. dessen Oberfläche.

Im Allgemeinen wird in diesem Zusammenhang mit sichtbarem Licht gearbeitet, welches im langwelligen roten Bereich angesiedelt sein kann, weil die Materialbahn beispielsweise als schwarz eingefärbte Gewebebahn ausgebildet ist. Selbstverständlich kann auch mit Weißlicht oder kurzwelligem sichtbaren Licht an dieser Stelle gearbeitet werden. Es ist grundsätzlich sogar auch möglich, im nicht sichtbaren Bereich des elektromagnetischen Spektrums zu arbeiten, beispielsweise mit nicht sichtbarem Infrarotlicht, welches auf die Materialbahn gerichtet und einerseits von der klebstofffreien Oberfläche und andererseits den Klebstoffstreifen unterschiedlich reflektiert und mithilfe des Sensors ausgewertet wird.

So oder so kann der Sensor anhand der Kontrastunterschiede zwischen einerseits der klebstofffreien Oberfläche der Materialbahn und andererseits dem Klebstoffstreifen den topologischen Verlauf des Klebstoffstreifens an der Oberfläche der Materialbahn vermessen und beispielsweise einen jeweiligen Abstand der Kante des Klebstoffstreifens von der Kante der Materialbahn, also den jeweiligen Kantenverlauf, messtechnisch erfassen.

Dabei wird meistens so vorgegangen, dass der Sensor aus den Kontrastunterschieden zwischen der klebstofffreien Oberfläche der Materialbahn und dem Klebstoffstreifen einen topologischen Kantenverlauf des Klebstoffstreifens auf der Materialbahn erfasst und für die weitere Verarbeitung vorgibt. Das wird erfindungsgemäß mithilfe der die Signale des Sensors auswertenden Steuereinheit realisiert und umgesetzt. Zu diesem Zweck wird die Materialbahn jeweils in Querrichtung verfahren.

Außerdem wird so vorgegangen, dass der jeweils erzeugte Längsschnitt in der mit dem Klebstoffstreifen ausgerüsteten Materialbahn gegebenenfalls unter Berücksichtigung eines vorgegebenen Minimalabstandes zum Rand bzw. der Kante des Klebstoffstreifens in die Materialbahn eingebracht wird. Dabei fungieren im Allgemeinen die von dem fraglichen Sensor an die Steuereinheit übermittelten Signale für den Kantenverlauf des Klebstoffstreifens als Regelgröße für die Stellbewegung der Materialbahn in Querrichtung.

Der Kantenverlauf des Klebstoffstreifens und folglich die Regelgröße wirkt dabei im Sinne einer Kreisstruktur und Gegenkopplung auf sich selbst zurück. Das heißt, je nach gemessenem Kantenverlauf und folglich der Regelgröße wird die Materialbahn entsprechend in Querrichtung bewegt, damit beispielsweise ein zuvor vorgegebener Kantenverlauf eingestellt und beibehalten wird. Je nach einer Abweichung des mithilfe des Sensors tatsächlich gemessenen Kantenverlaufes von dem vorgegebenen Kantenverlauf sorgt die Steuereinheit für eine entsprechende Stellbewegung dahingehend, dass die Materialbahn in Querrichtung bewegt wird.

Erfindungsgemäß erfolgt die Stellbewegung an der Materialbahn, und zwar in der Gestalt, dass die Materialbahn mit dem zugehörigen Antrieb ausgerüstet ist, um die gewünschte Bewegung in Querrichtung zu vollführen. Da als Schneideinrichtung typischerweise ein Messerbalken mit mehreren rotierbar am Messerbalken gelagerten Schneidmessern zum Einsatz kommt, wird die Schneideinrichtung bzw. der Messerbalken in der Regel ortsfest ausgelegt, wohingegen der Antrieb zur Querbewegung der Materialbahn eingesetzt wird. Dazu ist die die Materialbahn zuführende Abwickeleinheit erfindungsgemäß mit dem betreffenden Antrieb ausgerüstet. - Gegenstand der Erfindung ist auch eine Einrichtung zur Herstellung eines Klebebandes, die vorteilhaft zur Durchführung des zuvor beschriebenen Verfahrens geeignet und in den Ansprüchen 7 fortfolgende näher beschrieben wird.

Im Ergebnis werden ein Verfahren und eine zugehörige Einrichtung zur Herstellung eines Klebebandes vorgestellt, mit deren Hilfe die exakte Position und der exakte Kantenverlauf des Klebstoffstreifens auf dem solchermaßen hergestellten und konfektionierten Klebeband vermessen und vorgegeben werden können. Dadurch eröffnet die Erfindung die Möglichkeit, jeweils exakt gleiche Klebebänder augangsseitig der erfindungsgemäßen Einrichtung zur Verfügung zu stellen, die beispielhaft entweder für eine Linkswicklung oder für eine Rechtswicklung bei einem wendeiförmigen Wickelvorgang zur Herstellung eines Kabelbaumes eingesetzt werden können, wie dies im Stand der Technik bekannt ist und zuvor hinlänglich beschrieben wurde. Als Folge hiervon wird insgesamt die Logistik vereinfacht und lassen sich zum ersten Mal Klebebänder mit Klebstoffstreifen reproduzierbar ausrüsten, die besonders exakt gefertigt sind und folglich für die anschließende Umwicklung von Kabeln zu Kabelsätzen bzw. Kabelbäumen prädestiniert sind.

Grundsätzlich lassen sich die solchermaßen hergestellten Klebebänder natürlich auch im Zuge einer Längsummantelung um zusammenzufassende Kabel schlagen. Im Regelfall werden die nach dem zuvor beschriebenen Verfahren hergestellten Klebebänder jedoch wendeiförmig um die betreffenden Kabel herumgewickelt und der jeweils gewünschte Kabelbaum hergestellt. Hierin sind die wesentlichen Vorteile zu sehen.

Im Folgenden wird die Erfindung anhand einer lediglich am Ausführungsbeispiel darstellenden Zeichnung näher erläutert; es zeigen:

Fig. 1 eine erfindungsgemäße Einrichtung zur Herstellung eines Klebebandes in einer Übersicht,

Fig. 2 einen schematischen Querschnitt durch die Materialbahn im Zuge der Herstellung der einzelnen Klebebänder und

Fig. 3 eine ausschnittsweise Aufsicht auf die Einrichtung nach Fig. 1.

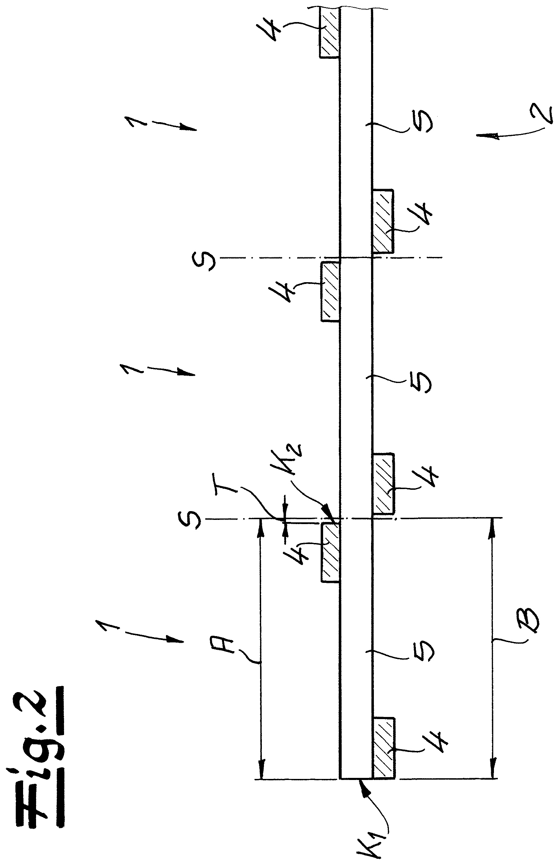

In den Figuren ist eine Einrichtung zur Herstellung eines Klebebandes 1 dargestellt. Anhand der Schnittdarstellung in der Fig. 2 erkennt man, dass beispielhaft und nicht einschränkend drei Klebebänder 1 aus einer Materialbahn 2 hergestellt werden, die von einer Abwickeleinheit 3 ausgehend zugeführt wird. Die einzelnen Klebebänder 1 sind jeweils mit Klebstoffstreifen 4 randseitig ausgerüstet.

Man erkennt anhand der Schnittdarstellung in der Fig. 2, dass die fraglichen Klebstoffstreifen 4 randseitig eines Trägers 5 des betreffenden Klebebandes 1 angeordnet sind. Der jeweilige Träger 5 wird durch in der Fig. 2 angedeutete Längsschnitte S aus der in Längsrichtung L zugeführten Materialbahn 2 geschnitten. Außerdem ist die Auslegung so getroffen, dass sich der jeweilige Klebstoffstreifen 4 vom Trägerrand in Richtung auf eine Trägermitte erstreckt und ein Klebstoffstreifen 4 an der Unterseite und der andere Klebstoffstreifen 4 an der Oberseite des Trägers 5 unter Bildung gleich aufgebauter Klebebänder 1 aufgebracht sind.

Nach dem Ausführungsbeispiel und nicht einschränkend sind die beiden Klebstoffstreifen 4 gleich ausgelegt und verfügen über eine Breite, die im Vergleich zur Gesamtbreite B des solchermaßen hergestellten Klebebandes 1 in etwa 20 % bis 50 % dieser Gesamtbreite B beträgt oder betragen kann. Der jeweilige Klebstoffstreifen 4 wird mit einer Beschichtungseinheit 6 auf die Materialbahn 2 aufgebracht. Dazu wird die Materialbahn 2 ausgehend von der Abwickeleinheit 3 zunächst einer ersten Beschichtungseinheit 6 für seine eine Oberfläche und daran anschließend einer weiteren zweiten Beschichtungseinheit 6 für die andere Oberfläche zugeführt. Selbstverständlich kann auch nur mit einer einzigen Beschichtungseinheit 6 gearbeitet werden, und zwar für den Fall, dass die Materialbahn 2 lediglich auf einer Oberfläche mit mehreren Klebstoffstreifen 4 ausgerüstet wird.

Bei der Beschichtungseinheit 6 zur Ausrüstung der Materialbahn 2 an zumindest einer Oberfläche mit dem Klebstoffstreifen 4 bzw. den mehreren parallel zueinander verlaufenden Klebstoffstreifen 4 handelt es sich um eine solche, mit deren Hilfe der jeweilige Klebstoff durch Direktbeschichtung auf die Materialbahn 2 im Zuge eines Düsenauftrages aufgebracht wird. Dazu wird der flüssige Klebstoff mithilfe beispielsweise einer Pumpe durch eine Breitschlitzdüse gedrückt. Jedem der in der Fig. 2 dargestelltem Klebstoffstreifen 4 ist dabei eine eigene Düse zugeordnet bzw. lassen sich die Klebstoffstreifen 4 auf einer gemeinsamen Oberfläche der Materialbahn 2 auch mithilfe einer einzigen Düse mit jeweils Unterbrechungen aufbringen.

Bei der Materialbahn 2 handelt es sich nicht einschränkend um eine Bahn aus einem Gewebe, insbesondere einem Polyestergewebe. Grundsätzlich kann die Materialbahn auch als Folienbahn, Laminat, Papierbahn etc. ausgebildet sein. Nach dem Ausführungsbeispiel kommt eine Materialbahn 2 aus einem Polyestergewebe zum Einsatz, welches aus eingefärbten Kett- und Schussfäden aufgebaut ist. Dementsprechend handelt es sich bei dem Träger 5 des solchermaßen hergestellten Klebebandes um einen Polyestergewebeträger.

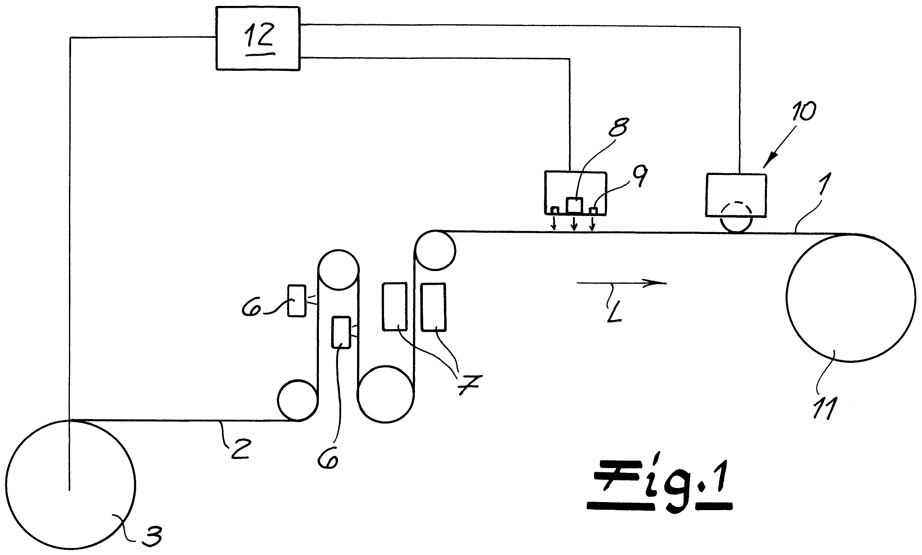

Tatsächlich mögen die fraglichen Kett- und Schussfäden im beschriebenen Beispielfall spinndüsengefärbt sein und über eine durchgängig gleiche Farbe, zum Beispiel schwarz, verfügen. Das gilt selbstverständlich nur beispielhaft, weshalb die fraglichen Fäden grundsätzlich auch orange oder anders eingefärbt sein können. Der Beschichtungseinheit 6 bzw. den beiden Beschichtungseinheiten 6 für die Materialbahn 2 folgt in der Fig. 1 in der durch einen Pfeil angedeuteten Verarbeitungsrichtung bzw. in Längsrichtung L der Materialbahn 2 eine Vernetzungseinheit 7. Die Vernetzungseinheit 7 weist im Beispielfall UV-Lampen oder UV-LEDs auf, mit deren Hilfe die auf die jeweilige Oberfläche der Materialbahn 2 aufgebrachten Klebstoffstreifen 4 bei Bedarf vernetzt werden. Das heißt, die Vernetzungseinheit 7 ist vorliegend als Option aufzufassen.

Im Rahmen des Ausführungsbeispiels ist die Vernetzungseinheit 7 zweigeteilt der jeweiligen Oberfläche der Materialbahn 2 zugeordnet ausgebildet. Das lässt sich darauf zurückführen, dass nach dem Ausführungsbeispiel beide Oberflächen der Materialbahn 2 mit zugehörigen Klebstoffstreifen 4 ausgerüstet sind.

Selbstverständlich ist eine solche Zweiteilung entbehrlich, wenn nur eine Oberfläche der Materialbahn 2 Klebstoffstreifen 4 aufweist, was vorliegend nicht dargestellt ist.

In Verarbeitungsrichtung bzw. Längsrichtung L der Materialbahn 2 erkennt man in der Übersichtszeichnung nach der Fig. 1 zunächst einen Sensor 8, 9, dessen Funktion und Ausprägung nachfolgend noch näher erläutert wird. Dem Sensor 8, 9 folgt eine Schneideinrichtung 10, mit deren Hilfe die jeweils in der Fig. 2 zu erkennenden Schnitte in Längsrichtung bzw. Längsschnitte S in die Materialbahn 2 eingebracht werden. Dazu weist die Schneideinrichtung 10 insgesamt einen Messerbalken auf, welcher zur Lagerung von jeweils um eine Querachse rotierenden Messern geeignet und vorgesehen ist, wie dies der Stand der Technik nach der EP 2 744 865 B1 beispielhaft zeigt und beschreibt.

Abschließend und der Schneideinrichtung 10 folgend sind die einzelnen Klebebänder 1 konfektioniert und können beispielsweise auf einer Aufwickeleinheit 11 aufgenommen bzw. aufgewickelt werden. - Wie bereits erläutert, handelt es sich bei der Materialbahn 2 um eine solche, bei der als Trägerbandmaterial eine Polyestergewebebahn zugeführt wird. Alternativ oder zusätzlich kann es sich bei der Materialbahn 2 auch um eine Vliesbahn, eine Folienbahn, eine Papierbahn sowie Kombinationen handeln.

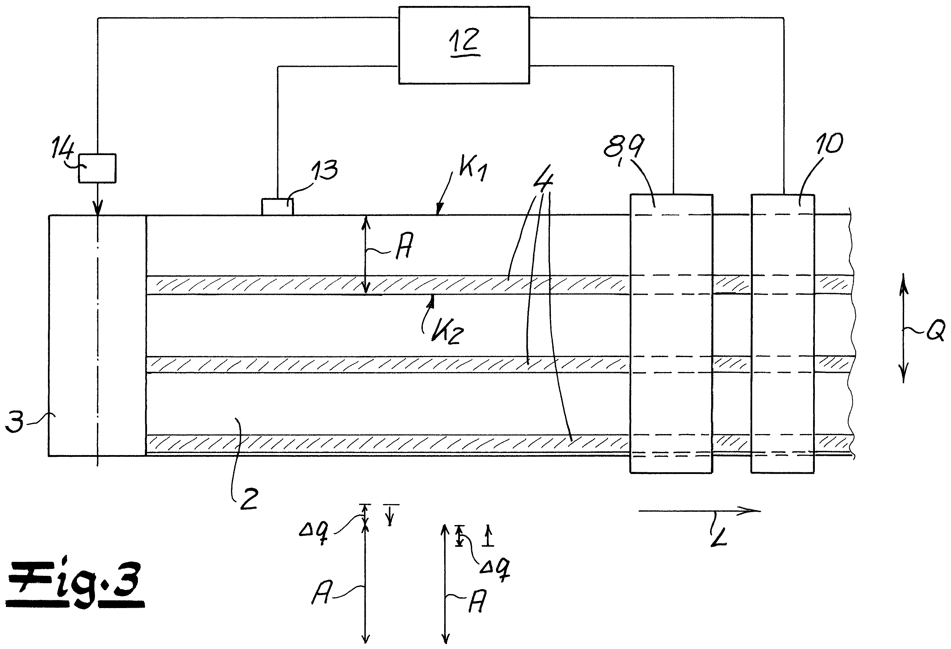

Mithilfe des Sensors 8, 9 wird die Materialbahn 2 abgetastet. Dazu ist der Sensor 8, 9 oberhalb einer Oberfläche der Materialbahn 2 vorgesehen und platziert. Nach dem Ausführungsbeispiel und nicht einschränkend wird die nach oben hin weisende Oberfläche der Materialbahn 2 mit dem dortigen Klebstoffstreifen 4 abgetastet, was selbstverständlich nur beispielhaft gilt. Tatsächlich kann der Sensor 8, 9 insgesamt Signale an eine Steuereinheit 12 abgeben, die ausweislich der Aufsicht entsprechende Darstellung in der Fig. 3 zu einem topologischen Kantenverlauf A; $K_1$, $K_2$ des jeweiligen Klebstoffstreifens 4 korrespondieren. Unter dem topologischen Kantenverlauf A; $K_1$, $K_2$ des Klebstoffstreifens 4 ist im Rahmen der Darstellung nach der Fig. 3 und des Ausführungsbeispiels ein Abstand A zwischen zwei Kanten $K_1$, $K_2$ zu verstehen und die zugehörigen Werte für den Abstand A in der Längsrichtung L der Materialbahn 2.

Mit der Kante $K_1$ ist nach dem Ausführungsbeispiel in der Fig. 3 die in der Vorschubrichtung bzw. Längsrichtung L linke Kante der Materialbahn 2 gemeint. Die Kante $K_2$ bezeichnet demgegenüber die in Laufrichtung bzw. Längsrichtung L rechte Kante des zur Kante $K_1$ der

Materialbahn 2 nächstbenachbarten Klebstoffstreifens 4. Der topologische Kantenverlauf A; $K_1$, $K_2$ gibt nun die Werte für den jeweiligen Abstand A zwischen den beiden Kanten $K_1$ und $K_2$ wieder, und zwar in Abhängigkeit von der jeweiligen Position der Materialbahn 2 in Längsrichtung L.

Die einzelnen und von der Längsrichtung L abhängigen Werte für den Abstand A werden vom Sensor 8, 9 als Signale in die Steuereinheit 12 eingespeist. Tatsächlich kann mithilfe des Sensors 8, 9 der Verlauf der $K_2$ erfasst werden. Mithilfe eines weiteren Sensors 13 wird dem gegenüber der Verlauf der Kante $K_1$ der Materialbahn 2 ermittelt und an die Steuereinheit 12 gesendet. Aus den beiden Werten für die Position der jeweiligen Kante $K_1$, $K_2$ in Abhängigkeit von ihrer Position im Vergleich zur Längsrichtung L der Materialbahn 2 kann die Steuereinheit 12 den bereits beschriebenen topologischen Kantenverlauf A; $K_1$, $K_2$ ermitteln.

Dazu ist zunächst einmal der Sensor 8, 9 so ausgerüstet, dass er die Materialbahn 2 auf Kontrastunterschiede hin abtasten kann. Bei den Kontrastunterschieden handelt es sich um unterschiedliche Werte für die Lichtreflexion von einerseits der klebstofffreien Oberfläche der Materialbahn 2 und andererseits den Klebstoffstreifen 4. Zu diesem Zweck ist der Sensor 8, 9 im Ausführungsbeispiel mit einer Kamera 8 und einer die Kamera 8 umgebenden Beleuchtungsquelle 9 ausgerüstet. Bei der Beleuchtungsquelle 9 handelt es sich vorliegend um die Kamera 8 beispielsweise ringförmig umgebende LEDs, die vorliegend langwelliges Licht in sichtbarem Spektrum abgeben, beispielsweise rotes Licht.

Dieses rote Licht der Beleuchtungsquelle 9 wird von der Materialbahn 2 unterschiedlich reflektiert. Tatsächlich ist die Materialbahn 2 an ihrer klebstofffreien Oberfläche neben dem Klebstoffstreifen 4 größtenteils opak ausgelegt, weist also eine nur geringe Lichtreflexion auf. Demgegenüber sorgt der Klebstoffstreifen 4 für eine erhöhte Lichtreflexion im sichtbaren Bereich, was sich typischerweise auf seinen in Aufsicht "silbrigen Charakter" zurückführen lässt. Jedenfalls kann der Sensor 8, 9 aus diesen Kontrastunterschieden auf den Verlauf der in der Vorschubrichtung bzw. Längsrichtung L rechte Kante $K_2$ des untersuchten Klebstoffstreifens 4 rückschließen. In Verbindung mit den zugehörigen und mithilfe des weiteren Sensors 13 ermittelten Werten für den Verlauf der Kante $K_1$ der Materialbahn 2 in diesem Bereich lässt sich insgesamt der Abstand A zwischen den beiden Kanten $K_1$, $K_2$ in Abhängigkeit von der Position der Materialbahn 2 an die Steuereinheit 12 übermitteln und hier auswerten.

Die Erfindung geht hierbei insgesamt von mehreren Erkenntnissen aus. Zunächst einmal verfügt die Materialbahn 2 über eine insgesamt durchgängig gleiche Breite, so dass Schwankungen des zuvor bereits erläuterten Abstandes A einzig und allein auf Bewegungen der Materialbahn 2 in der in Fig. 3 angedeuteten Querrichtung Q zurückzuführen sind. Darüber hinaus ist die die Klebstoffstreifen 4 auf die Materialbahn 2 aufbringende jeweilige Beschichtungseinheit 6 so ausgebildet, dass die einzelnen und in der Fig. 3 in Aufsicht dargestellten Klebstoffstreifen 4 einen gleichbleibenden Abstand zueinander aufweisen. Denn an dieser Stelle wird insgesamt mit einer oder mehreren jeweiligen Düsen für die Abgabe des Klebstoffes gearbeitet, die mechanisch fest miteinander und in fixem Abstand zueinander in der jeweiligen Beschichtungseinheit 6 angeordnet und platziert sind. Als Folge hiervon kann der Abstand A zwischen der in Laufrichtung bzw. Längsrichtung L linken Kante $K_1$ der Materialbahn 2 im Vergleich zur rechten Kante $K_2$ des der Kante $K_1$ benachbarten Klebstoffstreifens 4 insgesamt als Maß dafür dienen und eingesetzt werden, wie groß eine etwaige Verschiebung $\Delta q$ der Materialbahn 2 in der Querrichtung Q beim Durchlaufen durch die Einrichtung nach der Fig. 1 bemessen ist.

Tatsächlich ist die Steuereinheit 12 vorliegend als Regeleinheit 12 ausgebildet. Außerdem fungiert der fragliche Abstand A bzw. insgesamt der topologische Kantenverlauf A; $K_1$, $K_2$ als Regelgröße. Dazu kann in der Steuereinheit bzw. Regeleinheit 12 ein Sollwert für den fraglichen Abstand A vorgegeben werden. Weicht beispielsweise der tatsächlich gemessene Abstand um den Betrag $\Delta q$ von dem Sollwert A ab, das heißt misst der Sensor 8, 9 in Verbindung mit dem Sensor 13 an der untersuchten Position der Materialbahn 2 einen Wert von

$$A+\Delta q,$$

so sorgt die Steuereinheit 12 im Ausführungsbeispiel dafür, dass die Materialbahn 2 in Querrichtung nachgeführt bzw. ausgerichtet wird. Das korrespondiert ausweislich der vergrößerten Darstellung in der Fig. 3 vorliegend dazu, dass ein an die Steuereinheit 12 angeschlossener Antrieb 14 für die Abwickeleinheit 3 im Beispielfall im Vergleich zur Vorschubrichtung bzw. Längsrichtung L nach rechts in Querrichtung Q bewegt wird, wie dies ein zu dieser Situation gehöriger Pfeil andeutet.

Misst der Sensor 8, 9 dagegen einen um den Betrag $\Delta q$ geringeren Abstand A als vom Sollwert A vorgegeben, so korrespondiert hierzu eine entsprechende Bewegung der Abwickeleinheit 3 mithilfe des Antriebes 14 in der Gegenrichtung, das heißt vorliegend in der Vorschubrichtung bzw. Längsrichtung L nach links in Querrichtung Q. Das ist ebenfalls durch einen Pfeil angedeutet.

Auf diese Weise wird die Materialbahn 2 im Ausführungsbeispiel vor oder auch noch beim Schneidvorgang mithilfe der Schneideinrichtung 10 und nach der Ausrüstung der Materialbahn 2 mit dem jeweiligen Klebstoffstreifen 4 mithilfe des die Materialbahn 2 abtastenden Sensors 8, 9 in der Querrichtung Q ausgerichtet. Die Ausrichtung in der Querrichtung Q der Materialbahn 2 erfolgt dabei der Gestalt, dass ein jeweils mithilfe der Schneideinrichtung 10 erzeugter Längsschnitt bzw. die mehreren Längsschnitte S jeweils positionsgenau in die Materialbahn 2 eingebracht werden, wie dies in der Fig. 2 dargestellt ist.

Wie bereits erläutert, wird zu diesem Zweck die Materialbahn 2 auf Kontrastunterschiede zwischen der klebstofffreien Oberfläche und dem jeweiligen Klebstoffstreifen 4 hin untersucht. Die dargestellten Kontrastunterschiede, die mithilfe des Sensors 8, 9 ausgewertet werden, korrespondieren dabei zu unterschiedlichen Lichtreflexionen von einerseits der klebstofffreien Oberfläche und andererseits dem Klebstoffstreifen 4. Aus diesen Kontrastunterschieden ermittelt der Sensor 8, 9 den topologischen Kantenverlauf A; $K_1$, $K_2$ des betreffenden Klebstoffstreifens 4 auf der Materialbahn 2.

Um etwaige Abweichungen $\Delta q$ in der Querrichtung Q von einem Sollwert für den Abstand A auszugleichen, wird im Ausführungsbeispiel die Materialbahn 2 in der Querrichtung Q verfahren, nämlich die Abwickeleinheit 3. Dazu ist der Abwickeleinheit 3 der Antrieb 14 zugeordnet, welcher für eine Fahrbewegung in der Querrichtung Q der Materialbahn 2 sorgt.

Darüber hinaus besteht die grundsätzliche Möglichkeit, den jeweils erzeugten und in der Fig. 2 dargestellten Längsschnitt S randseitig des zugehörigen Klebstoffstreifens 4 gegebenenfalls unter Berücksichtigung eines vorgegebenen Minimalabstandes T zu der betreffenden Kante $K_2$ des Klebstoffstreifens 4 in die Materialbahn 2 einzubringen. Dieser Minimalabstand T stellt sicher, dass beim Eintauchen der rotierenden Messer der Schneideinrichtung 10 die fraglichen Messer nicht in Kontakt mit dem jeweiligen Klebstoffstreifen 4 kommen. Das gilt selbstverständlich nur beispielhaft und ist nicht zwingend erforderlich.

Jedenfalls werden die von dem Sensor 8, 9 an die Steuereinheit 12 übermittelten Signale zur Auswertung sowohl des Verlaufs der Kante $K_1$ der Materialbahn 2 insgesamt als auch der Kante $K_2$ des zumindest einen untersuchten Klebstoffstreifens 4 genutzt. Selbstverständlich liegt es im Rahmen der Erfindung, sämtliche Klebstoffstreifen 4 auf der in der Fig. 3 dargestellten Oberfläche der Materialbahn mithilfe des Sensors 8, 9 zu erfassen. Dann kann beispielsweise in der Steuereinheit 12 eine Mittelung des jeweiligen Kantenverlaufes $K_2$ des zugehörigen Klebstoffstreifens 4 erfolgen.

Da im Regelfall die Klebstoffstreifen 4 mit festem Abstand zueinander auf die Oberfläche der Materialbahn 2 mithilfe der jeweiligen Beschichtungseinheit 6 aufgebracht werden, ist eine solche Messung mehrerer Klebstoffstreifen 4 streng genommen nicht erforderlich, wenngleich möglich. - Grundsätzlich können die Einrichtung und das Verfahren kontinuierlich arbeiten. Es ist aber auch ein diskontinuierlicher Betrieb möglich, was jedoch nicht dargestellt ist.

**Patentansprüche**

1. Verfahren zur Herstellung eines Klebebandes (1) mit folgenden Verfahrensschritten:

   1.1) es wird eine Materialbahn (2) aus einem Trägerbandmaterial von einer Abwickeleinheit (3) zugeführt;

1.2) die zugeführte Materialbahn (2) wird anschließend an zumindest einer Oberfläche in einer Beschichtungseinheit (6) mit wenigstens einem Klebstoffstreifen (4) ausgerüstet;

1.3) die mit dem Klebstoffstreifen (4) ausgerüstete Materialbahn (2) wird nachfolgend mithilfe einer Schneideinrichtung (10) in zumindest zwei Längsstreifen geschnitten und zu den einzelnen Klebebändern (1) konfektioniert;

**dadurch gekennzeichnet, dass**

1.4) die Materialbahn (2) vor oder beim Schneidvorgang nach 1.3) und nach der Ausrüstung mit dem Klebstoffstreifen (4) gemäß 1.2) mithilfe eines die Materialbahn (2) abtastenden Sensors (8, 9) in Querrichtung (Q) so ausgerichtet wird, dass ein jeweils mithilfe der Schneideinrichtung (10) erzeugter Längsschnitt (S) positionsgenau in die Materialbahn (2) eingebracht wird und dazu

1.5) ein an eine Steuereinheit (12) angeschlossener Antrieb (14) für die Abwickeleinheit (3) im Vergleich zu Vorschubrichtung bzw. Längsrichtung (L) in der Querrichtung (Q) bewegt wird.

2. Verfahren nach Anspruch 1, **dadurch gekennzeichnet, dass** der Sensor (8, 9) die Materialbahn (2) auf Kontrastunterschiede hin abtastet.

3. Verfahren nach Anspruch 2, **dadurch gekennzeichnet, dass** es sich bei den Kontrastunterschieden um unterschiedliche Lichtreflexionen von einerseits der klebstofffreien Oberfläche der Materialbahn (2) und andererseits dem Klebstoffstreifen (4) handelt.

4. Verfahren nach einem der Ansprüche 1 bis 3, **dadurch gekennzeichnet, dass** der Sensor (8, 9) aus den Kontrastunterschieden zwischen der klebstofffreien Oberfläche der Materialbahn (2) und dem Klebstoffstreifen (4) in Verbindung mit einer seine Signalwerte auswertenden Steuereinheit (12) einen topologischen Kantenverlauf (A; $K_1$, $K_2$) des Klebstoffstreifens (4) auf der Materialbahn (2) erfasst.

5. Verfahren nach einem der Ansprüche 1 bis 4, **dadurch gekennzeichnet, dass** der jeweils erzeugte Längsschnitt (S) randseitig des Klebstoffstreifens (4) gegebenenfalls unter Berücksichtigung eines vorgegebenen Minimalabstandes (T) zur Kante ($K_2$) des Klebstoffstreifens (4) in die Materialbahn (2) eingebracht wird.

6. Verfahren nach einem der Ansprüche 1 bis 5, **dadurch gekennzeichnet, dass** die von dem Sensor (8, 9) an die Steuereinheit (12) übermittelten Signale für den Kantenverlauf (A; $K_1$, $K_2$) des Klebstoffstreifens (4) als Regelgröße für eine Stellbewegung der Materialbahn (2) in der Querrichtung (Q) fungieren.

7. Einrichtung zur Herstellung eines Klebebandes (1), insbesondere zur Durchführung des Verfahrens nach einem der Ansprüche 1 bis 6, mit einer Abwickeleinheit (3), welche eine Materialbahn (2) aus einem Trägerbandmaterial zuführt, ferner mit einer Beschichtungseinheit (6) zur Ausrüstung der Materialbahn (2) an zumindest einer Oberfläche mit zumindest einem Klebstoffstreifen (4), und mit einer Schneideinrichtung (10), welche die mit dem Klebstoffstreifen (4) ausgerüsteten Materialbahn (2) in zumindest zwei Längsstreifen schneidet, welche abschließend zum betreffenden Klebeband (1) konfektioniert werden, **dadurch gekennzeichnet, dass** ein Sensor (8, 9) vorgesehen ist, welcher die Materialbahn (2) abtastet und dessen Signale von einer Steuereinheit (12) zur Ausrichtung der Materialbahn (2) in Querrichtung (Q) ausgewertet werden, um die jeweils mithilfe der Schneideinrichtung (10) in die Materialbahn (2) eingebrachten Längsschnitte (S) positionsgenau in die Materialbahn (2) einzubringen und dazu ein an die Steuereinheit (12) angeschlossener Antrieb (14) für die Abwickeleinheit (3) im Vergleich zur Vorschubrichtung bzw. Längsrichtung (L) in der Querrichtung (Q) bewegt wird.

8. Einrichtung nach Anspruch 7, **dadurch gekennzeichnet, dass** der Sensor (8, 9) als Kontrastunterschiede der Materialbahn (2) im sichtbaren Spektrum abtastender optischer Sensor (8, 9) ausgebildet ist.

9. Einrichtung nach Anspruch 8, **dadurch gekennzeichnet, dass** der optische Sensor (8, 9) eine Kamera (8) aufweist.

**Claims**

1. Method for producing an adhesive tape (1) with the following method steps:

1.1) a material web (2) made of a carrier tape material is supplied from an unwinding unit (3);

1.2) at least one adhesive strip (4) is then applied to at least one surface of the supplied material web (2) in a coating unit (6);

1.3) the material web (2) with the applied adhesive strip (4) is then cut into at least two lengthwise strips with the aid of a cutting device (10) and assembled to form the individual adhesive tapes (1);

**characterized in that**

> 1.4) before or during the cutting process according to 1.3) and after application of the adhesive strip (4) according to 1.2), the material web (2) is aligned in the transverse direction (Q) in such manner by means of a sensor (8, 9) that scans the material web (2) that a precisely positioned lengthwise cut (S) created in each case with the cutting device (10) is introduced into the material web (2), and for this purpose
>
> 1.5) a drive (14) for the unwinding unit (3) connected to a control unit (12) is moved in the transverse direction (Q) relative to the direction of advance or lengthwise direction (L).

2. Method according to Claim 1, **characterized in that** the sensor (8, 9) scans the material web (2) for contrast differences.

3. Method according to Claim 2, **characterized in that** the contrast differences are differing light reflections from the surface of the material web (2) with no adhesive on the one hand and the adhesive strip (4) on the other.

4. Method according to any one of Claims 1 to 3, **characterized in that** the sensor (8, 9) captures a topological edge course $(A; K_1, K_2)$ of the adhesive strip (4) on the material web (2) from the contrast differences between the surface of the material web (2) without adhesive and the adhesive strip (4) in conjunction with a control unit (12) that evaluates the signal values thereof.

5. Method according to any one of Claims 1 to 4, **characterized in that** each lengthwise cut (S) created is introduced into the material web (2) on the border of the adhesive strip (4), optionally taking into account a predefined minimum distance (T) from the edge $(K_2)$ of the adhesive strip (4).

6. Method according to any one of Claims 1 to 5, **characterized in that** the signals for the edge course $(A; K_1, K_2)$ of the adhesive strip (4) transmitted by the sensor (8, 9) to the control unit (12) function as a control variable for an adjusting movement of the material web (2) in the transverse direction (Q).

7. Device for producing an adhesive tape (1), in particular for performing the method according to any one of Claims 1 to 6, having an unwinding unit (3) which feeds a material web (2) from a carrier tape material, further having a coating unit (6) for applying at least one adhesive strip (4) to at least one surface of the material web (2), and having a cutting device (10) which cuts the material web (2) with the adhesive strip (4) applied into at least two lengthwise strips, which are finally assembled to form the adhesive tape (1) in question,
**characterized in that**
a sensor (8, 9) is provided, which scans the material web (2) and from which the signals are evaluated by a control unit (12) for the purpose of aligning the material web (2) in the transverse direction (Q) in order to introduce the lengthwise cuts (S) into the material web (2), which are each introduced with precise positioning with the aid of the cutting device (10), and for this purpose a drive (14) for the unwinding unit (3) which is connected to the control unit (12) is moved in the transverse direction (Q) relative to the direction of direction of advance or lengthwise direction (L).

8. Device according to Claim 7, **characterized in that** the sensor (8, 9) is designed as an optical sensor (8, 9) which scans contrast differences in the material web (2) in the visible spectrum.

9. Device according to Claim 8, **characterized in that** the optical sensor (8, 9) includes a camera (8).

## Revendications

1. Procédé de fabrication d'une bande adhésive (1) avec les étapes de procédé suivantes :

> 1.1) une nappe de matière (2) d'un matériau de bande porteuse est acheminée par une unité de déroulement (3),
>
> 1.2) la nappe de matière (2) acheminée est ensuite dotée d'au moins une bande d'adhésif (4) sur au moins une surface dans une unité de revêtement (6),
>
> 1.3) la nappe de matière (2) dotée de la bande d'adhésif (4) est ensuite découpée à l'aide d'un dispositif de découpe (10) en au moins deux bandes longitudinales et confectionnée en bandes adhésives individuelles (1),

> **caractérisé en ce que**

> 1.4) la nappe de matière (2) est orientée dans la direction transversale (Q) avant ou lors de l'opération de découpe selon 1.3) et après la dotation avec la bande d'adhésif (4) selon 1.2) à l'aide d'un capteur (8, 9) analysant la nappe de matière (2) de telle manière qu'une coupe longitudinale (S) produite respectivement à l'aide du dispositif de découpe (10) est apportée en position exacte dans la nappe de matière (2) et qu'à cet effet
>
> 1.5) un entraînement (14) raccordé à une unité de commande (12) pour l'unité de déroulement (3) est déplacé dans la direction transversale (Q) par comparaison à la direction d'avance ou la direction longitudinale (L).

2. Procédé selon la revendication 1, **caractérisé en ce que** le capteur (8, 9) analyse la nappe de matière (2) eu égard aux différences de contraste.

3. Procédé selon la revendication 2, **caractérisé en ce que** concernant les différences de contraste, il s'agit de réflexions lumineuses différentes d'une part de la surface sans adhésif de la nappe de matière (2) et d'autre part de la bande d'adhésif (4).

4. Procédé selon l'une quelconque des revendications 1 à 3, **caractérisé en ce que** le capteur (8, 9) saisit en liaison avec une unité de commande (12) évaluant ses valeurs de signaux, un profil de bord topologique (A, $K_1$, $K_2$) de la bande d'adhésif (4) sur la nappe de matière (2) à partir des différences de contraste entre la surface dépourvue d'adhésif de la nappe de matière (2) et la bande d'adhésif (4).

5. Procédé selon l'une quelconque des revendications 1 à 4, **caractérisé en ce que** la coupe longitudinale (S) respectivement produite sur le bord de la bande d'adhésif (4) est apportée le cas échéant dans la nappe de matière (2) en tenant compte d'une distance minimale prédéfinie (T) par rapport au bord ($K_2$) de la bande d'adhésif (4).

6. Procédé selon l'une quelconque des revendications 1 à 5, **caractérisé en ce que** les signaux transmis par le capteur (8, 9) à l'unité de commande (12) pour le profil de bord (A, $K_1$, $K_2$) de la bande d'adhésif (4) font fonction de valeur de réglage pour un mouvement de réglage de la nappe de matière (2) dans la direction transversale (Q).

7. Dispositif de fabrication d'une bande adhésive (1), en particulier pour exécuter le procédé selon l'une quelconque des revendications 1 à 6, avec une unité de déroulement (3), laquelle achemine une nappe de matière (2) d'un matériau de bande porteuse, en plus avec une unité de revêtement (6) pour doter la nappe de matière (2) sur au moins une surface d'au moins une bande d'adhésif (4), et avec un dispositif de découpe (10), lequel découpe la nappe de matière (2) dotée de la bande d'adhésif (4) en au moins deux bandes longitudinales, lesquelles sont confectionnées finalement dans la bande adhésive en question (1),
**caractérisé en ce qu'**
un capteur (8, 9) est prévu, lequel analyse la nappe de matière (2) et dont les signaux sont évalués par une unité de commande (12) pour l'orientation de la nappe de matière (2) en direction transversale (Q) pour apporter les coupes longitudinales (S) respectivement apportées à l'aide du dispositif de découpe (10) dans la nappe de matière (2) exactement en position dans la nappe de matière (2) et un entraînement (14) pour l'unité de déroulement (3), raccordé à l'unité de commande (12) est déplacé à cet effet dans la direction transversale (Q) en comparaison à la direction d'avance ou la direction longitudinale (L).

8. Dispositif selon la revendication 7, **caractérisé en ce que** le capteur (8, 9) est constitué comme capteur optique (8, 9) analysant les différences de contraste de la nappe de matière (2) dans un spectre visible.

9. Dispositif selon la revendication 8, **caractérisé en ce que** le capteur optique (8, 9) comporte une caméra (8).

Fig.1

Fig.2

**Fig.3**

EP 3 679 102 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2744865 B1
- GB 2523390 A
- WO 2012167806 A1
- EP 2627539 B1
- WO 0218509 A1